# EUROPÄISCHE PATENTSCHRIFT

(11) **EP 1 961 212 B1**
(45) Veröffentlichungstag und Bekanntmachung des Hinweises auf die Patenterteilung: **21.11.2012**
(21) Anmeldenummer: 06830579.6
(22) Anmeldetag: 13.12.2006
(51) Int. Cl.: H04N 5/232, H04N 7/14, H04N 13/00

(54) **SYSTEM ZUR BIDIREKTIONALEN BILDAUFNAHME UND -WIEDERGABE**
BI-DIRECTIONAL IMAGE RECORDING AND REPRODUCTION SYSTEM
SYSTEME DE PRISE DE VUE ET DE REPRODUCTION D'IMAGES BIDIRECTIONNELLES

(30) Priorität: 14.12.2005 AT 19942005
(43) Veröffentlichungstag der Anmeldung: 27.08.2008
(73) Patentinhaber: Traint, Andreas, A-2842 Edlitz (AT)
(72) Erfinder: Traint, Andreas, A-2842 Edlitz (AT)
(74) Vertreter: Müllner, Martin
(86) Internationale Anmeldenummer: PCT/EP2006/069645
(87) Internationale Veröffentlichungsnummer: WO 2007/068713

(56) Entgegenhaltungen:
- WO-A1-2004/002151
- US-A- 4 977 323
- US-A- 4 982 092
- US-A- 5 548 300
- US-A- 5 790 183
- US-A- 5 801 758
- US-A1- 2005 041 218

## Beschreibung

### Technisches Gebiet

Die Erfindung betrifft ein System zur bidirektionalen Bildaufnahme und -wiedergabe an mindestens zwei Standorten mit mindestens je einem Aufnahmesystem und je einem Wiedergabesystem.

### Stand der Technik

Solch ein System ist aus der WO 2004/002151 A bekannt. An beiden Standorten ist ein senkrecht stehender Zylinder vorgesehen, der um seine Achse rotiert. Der Zylinder hat senkrechte Streifen, abwechselnd matt für die Projektion eines Bildes und transparent für die Aufnahme eines Bildes.

In der Mitte des Zylinders sind fest stehende Fernsehkameras angebracht, die in verschiedene Richtungen Bilder aufnehmen, sodass insgesamt der gesamte waagrechte Bereich (360°) aufgenommen wird. Jede Station hat weiters in der Mitte der Säule fest stehende Projektoren, wobei jeder Projektor das Bild der entsprechenden Kamera der anderen Station auf die matten Streifen projiziert. Der Zylinder dreht sich mit so hoher Geschwindigkeit, dass die Bewegung der Streifen durch das menschliche Auge nicht mehr wahrgenommen werden kann. Die Kameras werden daher durch die transparenten, schnell vorbeilaufenden Streifen hinreichend gleichmäßig belichtet. Das von den Projektoren ausgesendete Licht kann infolge von Abteilungen nicht zu den Kameras derselben Station gelangen, sodass es hier zu keinen Störungen kommt.

Auf diese Weise sieht man auf dem gesamten Umfang jedes Zylinders die gesamte Umgebung des anderen Zylinders. Wenn auch Tonübertragung vorgesehen ist, ist es möglich, mit einer Person vor der anderen Säule zu sprechen, wobei besonders hervorzuheben ist, dass Blickkontakt möglich ist, weil die Aufnahme durch den Wiedergabebereich hindurch erfolgt.

Ein weiteres System ist aus der US 4 977 323 bekannt.

Bei herkömmlichen Konferenzsystemen blickt jeder der Gesprächspartner auf seinen Bildschirm, wird aber von einer oberhalb, unterhalb oder seitlich neben dem Bildschirm angeordneten Kamera aufgenommen. Bei diesen Systemen ist daher kein Blickkontakt mit dem Gesprächspartner möglich, was zu lebensfremden Bildern führt. Dieser Nachteil ist durch die WO 2004/002151 A bereits beseitigt. Bei diesem System ist jedoch problematisch, dass es schwierig ist, den Übergangsbereich zwischen den Kameras so glatt zu machen, dass hier vom Betrachter keine Unstetigkeiten erkennbar sind.

### Darstellung der Erfindung

Es ist Aufgabe der Erfindung, diese Nachteile zu beseitigen und das System der eingangs genannten Art so zu verbessern, dass es mit weniger technischem Aufwand zu realisieren ist und dass es keine erkennbaren Übergänge zwischen verschiedenen Bildern mehr gibt.

Diese Aufgabe wird durch ein System nach Anspruch 1 gelöst.

Gemäß der vorliegenden Erfindung gibt es also weder ein feststehendes Aufnahmesystem noch ein feststehendes Wiedergabesystem. Beide Systeme werden bewegt. Es ist daher keine Fernsehkamera mehr notwendig, die einen Bildausschnitt sowohl horizontal als auch vertikal abtastet. Es genügt eine Art Scannerleiste (oder Inline-Array mit Objektiv), die das Bild in nur einer Dimension abtastet; in der anderen Dimension erfolgt die Abtastung durch die Bewegung des Systems.

Wenn die beiden Stationen gleich aufgebaut sind und sich synchron bewegen, ist die Wiedergabe sehr einfach: es muss nur jeweils jedes Pixel eines Wiedergabesystem-Streifens die Information wiedergeben, die das entsprechende Pixel des entsprechenden Aufnahmesystem-Streifens der anderen Station erfasst.

Nach einer Ausführungsform der Erfindung ist das System in Form eines Rotationskörpers, der um seine Achse rotiert, ausgebildet, an dessen Außenfläche die Wiedergabesystem-Streifen angebracht sind; vorzugsweise handelt es sich dabei um eine Kugel oder um einen senkrecht stehenden Zylinder, so wie dies aus der WO 2004/002151 A bekannt ist.

Das ist aber nicht unbedingt notwendig. Im Prinzip genügt ein einzelner Streifen, der um eine Achse rotiert. Dieser kann die Form eines Halbkreises haben, durch dessen Enden die senkrechte Achse verläuft; oder der Streifen ist eben, verläuft senkrecht und ist mit zwei waagrechten Stegen mit der senkrechten Achse verbunden, sodass sich ein waagrecht liegendes U ergibt. Damit keine Unwucht entsteht, ist es aber günstiger, zwei gegenüberliegende Streifen vorzusehen, sodass sich dann ein ganzer Kreis oder ein Rechteck ergibt.

Natürlich lässt sich diese Anordnung auch so modifizieren, dass die Achse nicht senkrecht steht. Dies gilt für alle Ausführungsformen.

Bei einem senkrecht stehenden Zylinder ist es zweckmäßig, wenn zwischen den Wiedergabesystem-Streifen Aufnahmesystem-Streifen in Form von Scannerleisten angebracht sind, wobei jedes Element der Scannerleisten in eine Richtung fokussiert, sodass sich die Verlängerungen dieser Richtungen etwa im Bereich der Zylinderachse schneiden. Dieses Merkmal bewirkt, dass die Verkleinerung von Objekten mit zunehmender Entfernung von dem Zylinder in senkrechter und in waagrechter Richtung gleich ist, sodass es zu keinen Verzeichnungen kommt. Bei einer Kugel als Rotationskörper ergibt sich dieses Merkmal automatisch, wenn jedes Element in eine Richtung senkrecht zur Kugeloberfläche fokussiert.

Alternativ dazu ist es auch möglich, dass zwischen den Wiedergabesystem-Streifen durchsichtige Streifen vorgesehen sind, dass hinter den durchsichtigen Streifen Spiegel angebracht sind und dass zwischen den durchsichtigen Bereichen und den Spiegeln Scannerleisten mit einer Optik angebracht sind, deren Abstand von den Spiegeln etwa dem Abstand der Spiegel von der Achse des Zylinders entspricht. Hier kommt man also mit einer Optik aus, die das erfasste Bild auf die Scannerleiste projiziert. Wenn der Abstand vom Spiegel dem Abstand der Spiegel von der Drehachse entspricht, dann sind die Hauptpunkte der Scannerobjektive scheinbar in der Drehachse, sodass auch hier wiederum die Verkleinerung von Objekten mit zunehmender Entfernung von dem Zylinder in senkrechter und in waagrechter Richtung gleich ist, sodass es zu keinen Verzeichnungen kommt.

Nach einer anderen Ausführungsform der Erfindung ist vorgesehen, dass das System in Form eines umlaufenden, biegsamen Bandes ausgebildet ist, das in einem Bereich in einer Ebene läuft und dass die Aufnahmesystem-Streifen und die Wiedergabesystem-Streifen in dem ebenen Bereich aktiviert sind, sodass die Bildaufnahme und die Bildwiedergabe in diesem ebenen Bereich stattfinden.

Alternativ dazu kann zur Wiedergabe eines ebenen Bildes das System in Form einer ebenen Fläche ausgebildet sein, die hin- und herbewegt wird. Will man eine Hin- und Herbewegung vermeiden, so kann man auch das System in Form eines Streifens oder in Form einer Scheibe ausbilden, der bzw. die um seinen bzw. ihren Mittelpunkt rotiert, wobei die Drehachse normal zum Streifen bzw. zur Scheibe steht

Schließlich ist es möglich, dass das Aufnahmesystem und das Wiedergabesystem für räumliche Darstellung ausgebildet sind.

### Kurze Beschreibung der Zeichnungen

Ausführungsbeispiele der Erfindung sind in den beiliegenden Zeichnungen schematisch dargestellt. Es zeigt: Fig. 1 eine erste Ausführungsform der Erfindung; Fig. 2 eine Variante davon mit schräg verlaufendem Aufnahmesystem-Streifen; Fig. 3 einen schematischen Schnitt durch einen Aufnahmesystem-Streifen; Fig. 4 zeigt einen horizontalen Schnitt durch eine andere Ausführungsform der Erfindung; Fig. 5, 6 und 8 zeigen weitere Ausführungsformen der Erfindung in Draufsicht; und Fig. 7 zeigt eine Ausführungsform mit stereoskopischer Bildaufnahme.

### Weg(e) zur Ausführung der Erfindung

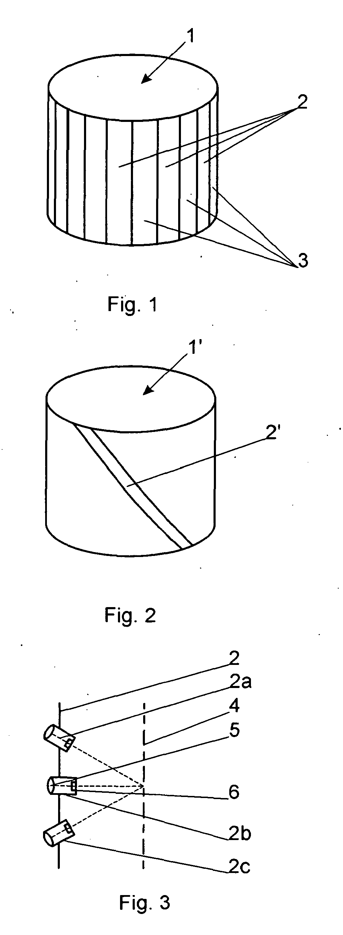

In Fig. 1 ist ein Zylinder 1 mit senkrechter Achse zu sehen. An dessen Umfang sind Aufnahmesystem-Streifen 2 und Wiedergabesystem-Streifen 3 abwechselnd angeordnet. In Fig. 1 verlaufen diese Streifen senkrecht, d.h. parallel zur Achse des Zylinders 1. Sie können aber auch in beliebigem Winkel schräg verlaufen. Dies ist in Fig. 2 angedeutet, wo ein Aufnahmesystem-Streifen 2' schräg auf der Mantelfläche des Zylinders 1' verläuft. Selbstverständlich sind auch hier - analog zu Fig. 1 - weitere Aufnahmesystem-Streifen vorhanden, und dazwischen befinden sich ebenfalls Wiedergabesystem-Streifen. Wichtig ist, dass bei Drehung des Zylinders 1 bzw. 1' jeder Punkt auf dem Zylindermantel abwechselnd von einem Aufnahmesystem-Streifen 2 und einem Wiedergabesystem-Streifen 3 überstrichen wird. Bei der in Fig. 1 gewählten Anordnung dürfen daher die Streifen nicht in Rotationsrichtung verlaufen, also nicht waagrecht liegen.

Auf den Wiedergabesystem-Streifen können verschiedenste Licht erzeugende Elemente angebracht sein. Bei großen Zylindern bieten sich in erster Linie LED's an, da diese bei den heutigen technischen Möglichkeiten noch als die stärksten Lichtquellen gelten, sodass die Bilder selbst gegen Sonnenlicht für das menschliche Auge noch gut wahrnehmbar sind. Es sind aber auch andere Technologien denkbar, wie Flüssigkristalldisplaytechnologien (LCD), Plasmadisplaytechnologien (PDP), Lasertechniken, TFT usw.

Man kann in jedem Streifen 3 z.B. 480 LED's übereinander vorsehen. Für farbige Bilder müssen immer drei LED's nebeneinander vorgesehen werden, eine rote, eine blaue und eine grüne. Das ergibt dann 1440 LED's. Es können stattdessen auch mehrfärbig ansteuerbare LED's eingesetzt werden.

Wenn man die Auflösung noch weiter steigern möchte, kann man die LED's im benachbarten Streifen 3 um den halben vertikalen Abstand der LED's versetzen. Es ergeben sich dann bei der Rotation des Zylinders 1 insgesamt 960 Zeilen.

Grundsätzlich wäre es auch denkbar, die Lichterzeugung ähnlich zu CRT-Monitoren zu bewirken, wobei hier der Elektronenstrahl nur in einer Richtung (normal zur Rotationsrichtung, also parallel zur Drehachse) abgelenkt werden muss, oder aber mit Projektoren ("Beamern") in Rückwärtsprojektion, deren Lichtstrahlen nur in dieser Richtung abgelenkt werden. Ebenso ist eine LED-Rückwärtsprojektion möglich, oder aber die Verwendung von drei verschiedenfärbigen Lasern in Rückwärtsprojektion.

Die Aufnahmestreifen 2 können lichtempfindliche Elemente an ihrer Außenseite aufweisen, ganz analog den Scannerleisten, wie sie in Flachbettscannern eingesetzt werden. Unterschiedlich zu Flachbettscannern ist die Richtung, von der jedes lichtempfindliche Element Licht aufnehmen kann. Bei einem Flachbettscanner "schauen" alle lichtempfindlichen Elemente in dieselbe Richtung, was im vorliegenden Fall nicht erwünscht ist. Durch die Rotation des Zylinders 1 ergibt sich für waagrecht einfallende Strahlen ein scheinbarer Standpunkt des Beobachters in der Zylinderachse. Um Verzeichnungen zu vermeiden, soll dies auch für die übrigen Strahlen stimmen. Aus diesem Grund soll die Anordnung wie in Fig. 3 schematisch angedeutet getroffen werden. In Fig. 3 sind die einzelnen Sensoren stark vergrößert dargestellt, sodass nur drei Sensoren 2a, 2b und 2c (einer oben, einer in der Mitte und einer unten) darstellbar sind. Tatsächlich entspricht die Anzahl der Sensoren aber der Anzahl der LEDs, d.h. es sind z.B. 480 Sensoren übereinander angeordnet.

Jeder Sensor 2a, 2b, 2c weist eine Sammellinse 5 und ein lichtempfindliches Element 6 auf. Die Sammellinse 5 fokussiert einen Parallelstrahl aus einer bestimmten Richtung auf das lichtempfindliche Element 6. Um Verzeichnungen zu vermeiden, sollen sich die rückwärtigen Verlängerungen dieser Richtungen (in Fig. 3 strichliert eingezeichnet) auf der Zylinderachse 4 schneiden.

Für Farbübertragungen müssen natürlich auch jeweils drei Aufnahmesensoren (einer empfindlich für rotes Licht, einer empfindlich für grünes Licht und einer empfindlich für blaues Licht) nebeneinander vorgesehen sein. Für höhere Auflösungen können natürlich wiederum die Sensoren im benachbarten Aufnahmesystem-Streifen um den halben vertikalen Abstand versetzt angeordnet sein, sodass die Anzahl der Zeilen erhöht wird.

Um nun auf einer Station die Umgebung der anderen Station darzustellen, genügt es im einfachsten Fall, die Zylinder der beiden Stationen synchron laufen zu lassen und jeweils eine LED eines Wiedergabesystem-Streifens 3 mit dem Signal des entsprechenden Sensors im entsprechenden Aufnahmesystem-Streifens anzusteuern.

In der Praxis wird man natürlich zumindest die Signale von jedem RGB-Triple (also von dem rotempfindlichen, dem grünempfindlichen und dem blauempfindlichen Sensor) zusammen auswerten und in Bezug auf Farbe, Helligkeit, Kontrast optimieren und erst dann wiedergeben. Noch besser ist natürlich eine Gesamtauswertung und Optimierung des gesamten Bildes. Die (optimierten) Signale der Sensoren wird man natürlich im Multiplex-Verfahren über eine einzige Leitung übertragen.

Ein großer Vorteil dieses Systems besteht darin, dass man von bestehenden Fernsehnormen völlig unabhängig ist. Man kann die Anzahl der LED's bzw. der lichtempfindlichen Sensoren für jeden Anwendungszweck optimal wählen und so gegebenenfalls auch sehr hochqualitative Übertragungen (hohe Auflösungen) erzielen. Gleiches gilt natürlich für die Anzahl der Streifen 2, 3 und für die Drehzahl des Zylinders 1.

Die Anzahl der Streifen 2, 3 bestimmt die notwendige Drehzahl des Zylinders 1. Das Auge soll die einzelnen Streifen 2, 3 nicht wahrnehmen können, sodass also die Zeit, die zwischen dem Durchlauf von zwei Streifen 3 vergeht, kleiner als 1/50 s sein soll. Bei 10 Streifen 3 ergeben sich dann 5 Umdrehungen pro Sekunde für den Zylinder 1. Eine geringere Umdrehungsgeschwindigkeit bewirkt eine längere Belichtung der Sensoren, sodass also durch eine größere Anzahl von Streifen die Lichtempfindlichkeit erhöht wird.

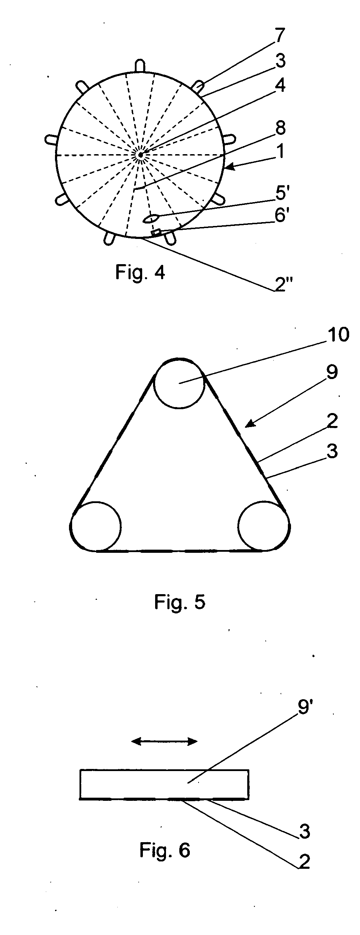

Wie aus Fig. 4 ersichtlich müssen die Sensoren nicht direkt an den Aufnahmesystem-Streifen 2" angebracht sein. Diese Aufnahmesystem-Streifen 2" sind hier einfach transparente Streifen des Zylinders 1. Die Wiedergabesystem-Streifen 3 sind durch LED's 7 kenntlich gemacht, die Grenze zwischen Aufnahmesystem-Streifen 2 und Wiedergabesystem-Streifen 3 ist durch strichlierte Linien angedeutet.

Hinter dem Aufnahmesystem-Streifen 2" befindet sich ein Spiegel 8. Dieser reflektiert das durch den Aufnahmesystem-Streifen 2" einfallende Licht auf eine Linse 5', die das Licht auf den Sensorstreifen 6' abbildet. Es ist hier also nur eine Linse 5' (oder ein Linsensystem) für den gesamten Sensorstreifen 6' vorhanden (und nicht für jeden Sensor eine eigene Linse), ganz analog wie bei herkömmlichen Fernsehkameras oder Fotoapparaten. Der Abstand der Linse 5' vom Spiegel 8 entspricht etwa dem Abstand des Spiegels 8 von der Zylinderachse 4. Damit befindet sich die Linse 5' scheinbar etwa auf der Zylinderachse 4, was zum Vermeiden von Verzeichnungen günstig ist. Damit der Sensorstreifen 6' selbst nicht im Strahlengang liegt, ist der Spiegel 8 etwas verdreht dargestellt. Der Spiegel 8 könnte aber natürlich genauso nach oben oder unten geneigt sein.

Der Grund, warum ein Spiegel 8 vorgesehen ist, ist das Platzproblem. In Fig. 4 ist nur ein Sensorstreifen 6' dargestellt, aber es ist natürlich für jeden Aufnahmesystem-Streifen 2" solch ein Sensorstreifen 6' notwendig. Es ist nun aus Platzgründen nicht möglich, alle Sensorstreifen 6' in der unmittelbaren Nähe der Zylinderachse 4 anzubringen. Deshalb werden Spiegel 8 eingesetzt, die bewirken, dass die Sensorstreifen 6' bzw. die Linse 5' scheinbar in der Nähe der Zylinderachse 4 sind (d.h. also ihr Spiegelbild befindet sich in der Nähe der Zylinderachse 4).

Fig. 5 zeigt eine Ausführungsform, wo die Aufnahmesystem-Streifen 2 und die Wiedergabesystem-Streifen 3 auf einem Band 9 angebracht sind, das um Walzen 10 umläuft. Zwischen den Walzen ergeben sich gerade Flächen, die für die Bildaufnahme und die Bildwiedergabe genützt werden können. Hier ergibt sich gegenüber einem Zylinder 1 der Unterschied, dass eine exakt parallelperspektivische Aufnahme möglich ist. Die einzelnen Aufnahmesensoren in einem Aufnahmesystemstreifen 2 werden daher - im Gegensatz zu Fig. 3 - alle parallel zueinander angeordnet.

Ähnliches gilt für die Ausführungsform gemäß Fig. 6, wo die Aufnahmesystem-Streifen 2 und die Wiedergabesystem-Streifen 3 auf einer Platte 9' angebracht sind, die in Richtung des Doppelpfeils hin- und herbewegt wird.

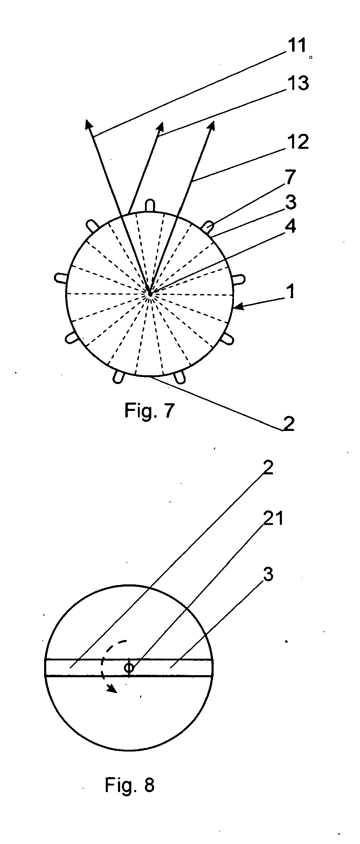

Will man eine hin- und hergehende Bewegung verhindern, so kann man die Ausführungsform gemäß Fig. 8 wählen. Hier ist ein Streifen vorgesehen, der um die Achse 21 rotiert. Bezüglich dieser Achse 21 ist ein Aufnahmesystem-Streifen 2 gegenüber einem Wiedergabesystem-Streifen 3 um 180° versetzt, sodass sich letztlich ein durchgehender Streifen ergibt. In diesem Beispiel "schauen" die Sensoren normal zur Zeichenebene.

Es können natürlich auch mehrere Streifen vorgesehen sein, sodass z.B. zwischen Aufnahmesystem-Streifen und Wiedergabesystem-Streifen ein Winkel von 30° eingeschlossen ist. In diesem Falle wird man zweckmäßigerweise eine Scheibe vorsehen, auf der die einzelnen Streifen angebracht sind.

Die Ausführungsform mit Zylinder hat den Vorteil, dass sie sehr leicht auf stereoskopische Bildwiedergabe ausgelegt werden kann, wie anhand von Fig. 7 erklärt wird. Normalerweise "schauen" die Sensoren in den Aufnahmesystem-Streifen 2 alle radial nach außen, d.h. sie nehmen nur Licht auf, das aus dieser Richtung kommt. In Fig. 7 sind diese Richtungen für zwei benachbarte Streifen mit 11 und 12 bezeichnet. Um nun stereoskopische Bildwiedergabe zu ermöglichen, muss man nur weitere Sensoren anbringen, die aus einem anderen Winkel das Licht aufnehmen, wie dies durch den Pfeil 13 angedeutet ist. Diese Sensoren "schauen" nun in dieselbe Richtung wie die Sensoren mit dem Pfeil 12, sodass diese beiden Sensoren die parallaktische Verschiebung erfassen. Selbstverständlich sind in jedem Aufnahmesystem-Streifen solch zusätzliche Sensoren vorzusehen.

Zur Wiedergabe sind auch doppelt so viele LED's notwendig. Im einfachsten Fall polarisiert man die LED's, die von den "normalen" Sensoren angesteuert werden, in einer Richtung, z.B. horizontal, und die LED's, die von den "schräg schauenden" Sensoren angesteuert werden, in der Richtung normal dazu, z.B. vertikal. Wenn nun der Betrachter eine entsprechende Polarisationsbrille trägt, nimmt jedes Auge nur das Licht von den entsprechenden LED's auf, sodass sich der gewünschte stereoskopische Effekt ergibt.

Will man Polarisationsbrillen vermeiden, so bietet sich die so genannte Lentikulartechnik an. Dazu gibt es sehr viel Patentliteratur, nur beispielsweise sei auf die
EP 1521483 A
verwiesen. Wenn - so wie dies in dieser Schrift vorgesehen ist - mehr als zwei (z.B. 5) Aufnahmerichtungen vorgesehen werden sollen, so ist dies im Rahmen der vorliegenden Erfindung auch leicht zu realisieren, indem in jedem Aufnahmesystem-Streifen die Sensoren in fünf verschiedenen Richtungen angeordnet werden, sodass Licht aus 5 verschiedenen Richtungen erfasst werden kann.

## Patentansprüche

1. System zur bidirektionalen Bildaufnahme und -wiedergäbe an mindestens zwei Standorten mit mindestens je einem Aufnahmesystem und je einem Wiedergabesystem, **dadurch gekennzeichnet, dass** das Wiedergabesystem durch mindestens einen Streifen (3) von Licht emittierenden Elementen, wie Leuchtdioden, LCD-Elementen, TFT-Elementen , gebildet wird, dass das Aufnahmesystem in der Art eines Scanners durch mindestems einen Aufnahmesystem-Streifen jeweils einen Streifen des aufzunehmenden Bildes erfasst und dass Mittel zur Bewegung des gasamten Systems bestehend aus wiedergabesystem und Aufnahmesystem vorgesehen sind, entweder hin- und her oder umlaufend, wobei die Bewegungsrichtung von der Längsrichtung der Streifen verschieden, vorzugsweise etwa normal dazu, ist, dass der Aufnahmesystem-Streifen und der wiedergabesystem-Streifen zweinander in Bewegungsrichtung versetzt sind, dass bei mehreren Wiedergabesystem-Streifen (3) und Aufnahmesystem-Streifen (2) die Aufnahmesystem-Streifen (2) zwischen den Wiedergabesystem-Streifen (3) angeordnet sind und dass die Bewegungsgeschwindigkeit so hoch gewählt ist, dass die Zeit zwischen dem Durchlauf von aufeinander folgenden Wiedergabesystem-Streifen (3) und die Zeit zwischen dem Durchlauf von aufeinander folgenden Aufnahmesystem-Streifen (2) geringer ist als die zeitliche Auflösung des menschlichen Auges.

2. System nach Anspruch 1, **dadurch gekennzeichnet, dass** es an allen Standorden jeweils in Form eines Rotationskörpers, der um seine Achse rotiert, ausgebildet ist, an dessen Außenfläche die Wiedergabesystem-Streifen (3) angebracht sind.

3. System nach Anspruch 2, **dadurch gekennzeichnet, dass** der Rotationskörper eine Kugel ist.

4. System nach Anspruch 2, **dadurch gekennzeichnet, dass** der Rotationskörper ein senkrecht stehender Zylinder (1, 1') ist.

5. System nach Anspruch 4, **dadurch gekennzeichnet, dass** zwischen den Wiedergabesystem-Streifen (3) Aufnahmesystem-Streifen (2) in Form von Scannerleisten angebracht sind, wobei jedes Element (2a, 2b, 2c) der Scannerleisten in eine Richtung fokussiert, sodass sich die Verlängerungen dieser Richtungen etwa im Bereich der Zylinderachse (4) schneiden.

6. System nach Anspruch 4, **dadurch gekennzeichnet, dass** die Aufnahmesystem-Streifen (2) in form von durchsichtigen Streifen (2') vorgesehen sind hinter denen Spiegel (8) angebracht sind wobei zwischen den durchsichtigen Streifen (2') und den Spiegeln (8) Scannerleisten (6') mit einer Optik (5') angebracht sind, deren Abstand von den Spiegeln (8) etwa dem Anstand der Spiegel (8) von der Zylinderachse (4) entspricht.

7. System nach Anspruch 1, **dadurch gekennzeichnet, dass** das System an allen Standorten jeweils in Form eines umlaufenden, biegsamen Bandes (9) ausgebildet ist, das in einem Bereich in einer Ebene läuft, und dass die Aufnahmesystem-Streifen (2) und die Wiedergabesystem-Streifen (3) in dem ebenen Bereich aktiviert sind, sodass die Bildaufnahme und die Bildwiedergabe in diesem ebenen Bereich stattfinden.

8. System nach Anspruch 1, **dadurch gekennzeichnet, dass** das System an allen Standorten jeweils in Form einer ebenen Fläche (9') ausgebildet ist, die hin- und herbewegt wird.

9. System nach Anspruch 1, **dadurch gekennzeichnet, dass** das System an allen Standorten jeweils in Form eines Streifens oder in Form einer Scheibe ausgebildet ist, der bzw. die um seinen bzw. ihren Mittelpunkt (21) rotiert, wobei die Drehachse normal zum Streifen bzw. zur Scheibe steht.

10. System nach einem der Ansprüche 1 bis 8, **dadurch gekennzeichnet, dass** das Aufnahmesystem und das Wiedergabesystem für räumliche Darstellung ausgebildet sind.

## Claims

1. A system for bi-directional image-recording and -reproduction at at least two locations having at least one respective recording system and one respective reproduction system, **characterised in that** the reproduction system is formed by means of at least one strip (3) of light-emitting elements, such as light-emitting diodes, LCD elements, TFT elements, **in that** the recording system in the manner of a scanner by means of at least one recording-system strip in each case detects one strip of the image that is to be recorded, and **in that** means are provided to move the whole system consisting of the reproduction system and the recording system either to and fro or in rotation, wherein the direction of movement is different from the longitudinal direction of the strips, is preferably substantially perpendicular thereto, **in that** the recording-system strip and the reproduction-system strip are offset in relation to each other in the direction of movement, **in that** in the case of a plurality of reproduction-system strips (3) and recording-system strips (2) the recording-system strips (2) are arranged between the reproduction-system strips (3), and **in that** the selected speed of movement is so high that the time between the passage of successive reproduction-system strips (3) and the time between the passage of successive recording-system strips (2) is shorter than the temporal resolution of the human eye.

2. A system according to claim 1, **characterised in that** at all locations it is in each case formed as a body of rotation which rotates about its axis and on the outer surface of which the reproduction-system strips (3) are mounted.

3. A system according to claim 2, **characterised in that** the body of rotation is a sphere.

4. A system according to claim 2, **characterised in that** the body of rotation is a vertical cylinder (1, 1').

5. A system according to claim 4, **characterised in that** recording-system strips (2) in the form of scanner bars are mounted between the reproduction-system strips (3), wherein each element (2a, 2b, 2c) of the scanner bars focuses in a direction so that the extensions of these directions intersect substantially in the region of the cylinder axis (4).

6. A system according to claim 4, **characterised in that** the recording-system strips (2) are provided in the form of transparent strips (2"), behind which mirrors (8) are mounted, wherein mounted between the transparent strips (2") and the mirrors (8) there are scanner bars (6') with a lens (5'), the distance of which from the mirrors (8) substantially corresponds to the distance of the mirrors (8) from the cylinder axis (4).

7. A system according to claim 1, **characterised in that** at all locations the system is in each case formed as a rotating, flexible band (9) that runs in one region in a plane, and **in that** the recording-system strips (2) and the reproduction-system strips (3) are activated in the planar region so that the image-recording and the image-reproduction take place in this planar region.

8. A system according to claim 1, **characterised in that** at all locations the system is in each case formed as a planar surface (9') that is moved to and fro.

9. A system according to claim 1, **characterised in that** at all locations the system is in each case formed as a strip or as a disc that rotates about its central point (21), wherein the axis of rotation is perpendicular to the strip or the disc.

10. A system according to one of claims 1 to 8, **characterised in that** the recording system and the reproduction system are formed for three-dimensional representation.

## Revendications

1. Système permettant une acquisition et reproduction d'images à au moins deux endroits dont chacun est au moins doté d'un système d'acquisition et d'un système de reproduction, **caractérisé en ce que** ledit système de reproduction est réalisé sous forme d'au moins une bande (3) d'éléments émetteurs de lumière tels que les diodes électroluminescentes, les éléments LCD, les éléments TFT, que ledit système d'acquisition balaie au moyen de chacun d'au moins une bande de système d'acquisition, à la manière d'un scanner informatique, une bande de l'image à acquérir, et qu'il est doté de moyens destinés à entraîner en mouvement le système entier constitué dudit système de reproduction et dudit système d'acquisition d'effectuer un mouvement, soit de va-et-vient soit de façon continue en périphérie, le sens dudit mouvement étant différent de la direction longitudinale des bandes, de préférence approximativement perpendiculaire à cette dernière, que ladite bande de système d'acquisition et la bande de système de reproduction sont décalées l'une par rapport à l'autre dans le sens du mouvement, que dans le cas de plusieurs bandes de système de reproduction (3) et bandes de système d'acquisition (2), les bandes de système d'acquisition (2) sont disposées entre les bandes de système de reproduction (3) et que l'on choisit une vitesse de mouvement suffisamment élevée pour que le délai entre le passage de bandes de système de reproduction (3) qui se suivent et le délai entre le passage de bandes de système d'acquisition (2) qui se suivent soient inférieurs à la résolution temporelle de l'oeil humain.

2. Système selon la revendication 1, **caractérisé en ce qu'**il est réalisé, à chacun desdits endroits, sous forme d'un solide de révolution tournant autour de son axe, les bandes de système de reproduction (3) étant montées sur sa face extérieure.

3. Système selon la revendication 2, **caractérisé en ce que** ledit solide de révolution est une sphère.

4. Système selon la revendication 2, **caractérisé en ce que** ledit solide de révolution est un cylindre en disposition verticale (1, 1').

5. Système selon la revendication 4, **caractérisé en ce que** des bandes de système d'acquisition (2) se présentant sous forme de listeaux de scanner sont montées entre les bandes de système de reproduction (3), le foyer optique de chaque élément (2a, 2b, 2c) desdites bandes de scanner étant situé dans une direction telle que les prolongations de ces directions se croisent environ au niveau de l'axe du cylindre (4).

6. Système selon la revendication 4, **caractérisé en ce que** les bandes de système d'acquisition (2) sont réalisées sous forme de bandes transparentes (2") derrière lesquelles sont montés des miroirs (8), des listeaux de scanner (6') pourvus d'une optique (5') étant montés entre les bandes transparentes (2") et les miroirs (8), leur distance par rapport aux miroirs (8) correspondant environ à la distance des miroirs (8) par rapport à l'axe du cylindre (4).

7. Système selon la revendication 1, **caractérisé en ce que** ledit système est réalisé, à chacun desdits endroits, sous forme d'une bande (9) flexible effectuant un mouvement continue en périphérie et dont la trajectoire comporte une partie plane, et que les bandes de système d'acquisition (2) et les bandes de système de reproduction (3) sont activées dans ladite partie plane, ladite acquisition et reproduction d'images étant ainsi réalisées dans cette partie plane.

8. Système selon la revendication 1, **caractérisé en ce que** ledit système est réalisé, à chacun desdits endroits, sous forme d'une face place (9') qui est entraînée dans un mouvement de va-et-vient.

9. Système selon la revendication 1, **caractérisé en ce que** ledit système est réalisé, à chacun desdits endroits, sous forme d'une bande ou sous forme d'un disque effectuant un mouvement rotatif autour le son centre (21), l'axe de rotation étant perpendiculaire par rapport à ladite bande ou audit disque.

10. Système selon l'une des revendications 1 à 8, **caractérisé en ce que** ledit système d'acquisition et ledit système de reproduction sont réalisés de façon à permettre une représentation tridimensionnelle.
